# EUROPEAN PATENT APPLICATION

(11) **EP 2 186 772 A1**
(43) Date of publication of application: **19.05.2010**
(21) Application number: 09175308.7
(22) Date of filing: 06.11.2009
(51) Int. Cl.: B67D 1/08, B67D 3/00

(54) **Water supply apparatus**

(30) Priority: 18.11.2008 KR 20080114914
(71) Applicant: Youngone Corporation, Incheon-si 405-846 (KR)
(72) Inventor: Chang, Soouk Eun, 422-040, Gyeonggi-do (KR); Son, Heung Jin, 422-040, Gyeonggi-do (KR)
(74) Representative: Bentz, Jean-Paul

(57) **Abstract**

Provided is a water supply apparatus (10). In detail, a structure of the water supply apparatus (10) is improved to easily supply carbonated water. The water supply apparatus (10) includes a carbonated water tank (70) in which cold water and carbon dioxide are mixed to generate carbonated water, a carbon dioxide container (80) supplying the carbon dioxide to the carbonated water tank (70), a first cooling case (100) separably coupled to the outside of the cold water tank (30), the first cooling case (100) being heat-exchanged with the cold water tank (30), and a first refrigerant coil (102) disposed outside the first cooling case (100), the first refrigerant coil (102) being configured to cool the first cooling case (100). An outer surface of the cold water tank (30) contacts an outer surface of the first cooling case (100) to cool the first cooling case (100). According to the water supply apparatus, the cold water tank (30) may be easily separated to easily replace and clean the cold water tank, and sanitation may be improved.

## Description

### BACKGROUND

The present disclosure relates to a water supply apparatus.

Generally, hot-and-cold-water purifiers are drinking water supply apparatuses that purify water supplied from a separate water tank or a faucet and cool or heat the supplied water at a predetermined temperature to supply the drinking water having a temperature desired by a user.

As tap water may be frequently polluted in recent years, water purifiers are widely installed at various places such as homes, companies, and public places. Also, combined purifiers that provide hot and cold water as well as carbonated water are appearing.

Carbonated water has been drunk in America and Europe since a long time ago, and the carbonated water is being sold in the market in a state where it put in a separate container.

However, since the carbonated water being sold in the market has a low carbonation level, the carbonated water is not to user's taste. Specifically, consumers in Europe prefer carbonated water having a high carbonation level.

Generally, in combined purifiers that provide hot and cold water as well as carbonated water, a separate refrigerant coil for cooling at least cold water tank or carbonated water tank is provided.

In related art combined purifiers that provide hot and cold water as well as carbonated water, when the refrigerant coil is coupled to the cold water tank or the carbonated water tank, it is difficult to clean the inside and outside of the cold water tank or the carbonated water tank. Also, when the cold water tank or the carbonated water tank is replaced, there is a limitation that the refrigerant coil is replaced together.

Cold water and carbon dioxide are supplied to the carbonated water tank to generate carbonated water. Thus, it is difficult to mix the cold water with the carbon dioxide.

In addition, when a pressure within the carbonated water tank is over a predetermined level, a carbonated water duct may be damaged when the carbonated water is discharged to leak to the outside.

### SUMMARY

Embodiments provide a water supply apparatus in which a structure thereof is improved to easily separate a cold water tank and a carbonated water tank.

Embodiments also provide a water supply apparatus in which a structure of a carbonated water tank is improved to easily mix cold water with carbon dioxide, thereby generating carbonated water having a high concentration and a low temperature.

In one embodiment, a water supply apparatus includes: a carbonated water tank in which cold water and carbon dioxide are mixed to generate carbonated water; a carbon dioxide container supplying the carbon dioxide to the carbonated water tank; a first cooling case separably coupled to the outside of the cold water tank, the first cooling case being heat-exchanged with the cold water tank; and a first refrigerant coil disposed outside the first cooling case, the first refrigerant coil being configured to cool the first cooling case, wherein an outer surface of the cold water tank contacts an outer surface of the first cooling case to cool the first cooling case.

The details of one or more embodiments are set forth in the accompanying drawings and the description below. Other features will be apparent from the description and drawings, and from the claims.

### BRIEF DESCRIPTION OF THE DRAWINGS

FIG. 1 is a perspective view of a water supply apparatus according to an embodiment.

FIG. 2 is an exploded perspective view of the water supply apparatus according to an embodiment.

FIG. 3 is an exploded perspective view of a cold water tank and a first cooling case according to an embodiment.

FIG. 4 is a sectional view of a carbonated water tank according to an embodiment.

FIG. 5 is a sectional view of a carbonated water tank according to another embodiment.

### DETAILED DESCRIPTION OF THE EMBODIMENTS

Reference will now be made in detail to the embodiments of the present disclosure, examples of which are illustrated in the accompanying drawings. However, the present disclosure should not be construed as being limited to those preferred embodiments set forth herein, and it will be understood by those skilled in the art that addition, modification, and deletion of another element may be made without departing from the spirit and scope of the present disclosure.

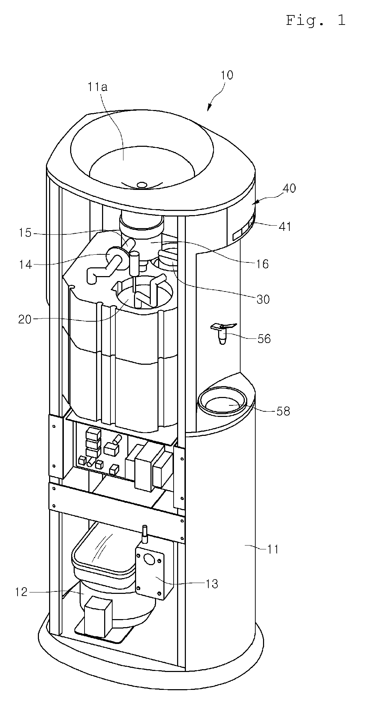

FIG. 1 is a perspective view of a water supply apparatus according to an embodiment.

Referring to FIG. 1, a water supply apparatus 10 according to an embodiment includes a body part 11 defining an outer appearance thereof, a tank seating part 11a disposed on an upper end of the body part 11, a hot water tank 20, and a cold water tank 30. The hot water tank 20 and the cold water tank 30 are disposed below the tank seating part 11a. Here, the hot water tank 20 and the cold water tank 30 may be disposed parallel to each other. Although not shown, a water tank (not shown) may be seated on the tank seating part 11a.

A reservoir 16 for storing water supplied from the water tank is disposed between the water tank and the hot and cold water tanks 20 and 30. The water stored in the reservoir 16 may be introduced into the hot water tank 20 and the cold water tank 30.

An air pump 13 for pumping external air into the body part 11 is disposed in the body part 11. The air introduced through the air pump 13 may flow toward the reservoir 16.

An air filter 14 for filtering the air introduced through the air pump 13 is disposed at a side of the reservoir 16. An air check valve 15 for preventing air from flowing backward is disposed between the reservoir 16 and the air filter 14.

The air filtered by the air filter 14 may flow into the reservoir 16 through the air check valve 15. The air within the reservoir 16 may be introduced into the water tank when water is supplied from the water tank to the reservoir 16.

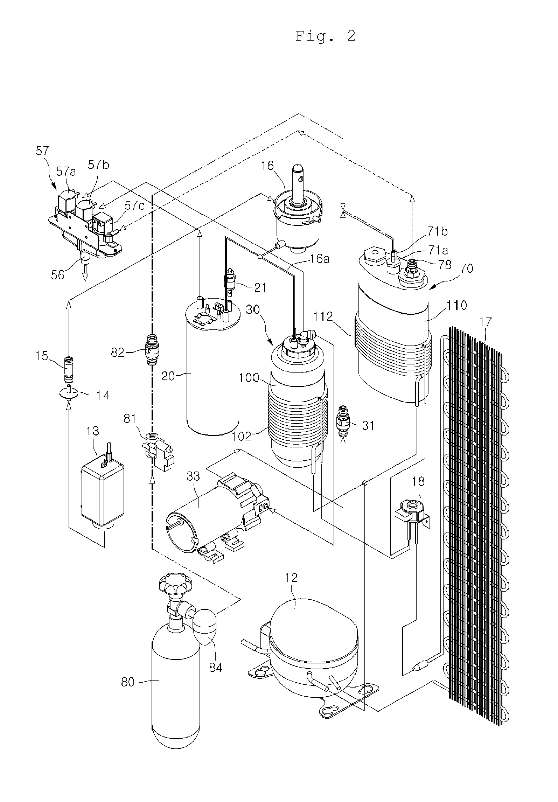

A compressor 12 for compressing refrigerant by which water within the cold tank 30 is cooled is disposed at a lower portion of the body part 11. High-temperature high-pressure refrigerant passing through the compressor 12 flows toward a condenser (see reference numeral 17 of FIG. 2).

A display part 40 for displaying an operation state of the water supply apparatus 10 is disposed on a front surface of the body part 11. A plurality of input parts 41 operable by a user is disposed in the display part 40. The input parts 41 includes a hot water dispensing button, a cold water dispensing button, a carbonated water dispensing button, etc.

A dispensing part 56 through which water (for example, cold water, hot water, and carbonated water) desired by the user is dispensed is disposed below the display part 40. The dispensing part 56 may have a dispensing valve shape operable by the user. A cup support 58 on which a cup is mounted may be disposed below the dispensing part 56.

FIG. 2 is an exploded perspective view of the water supply apparatus according to an embodiment.

Referring to FIG. 2, the water supply apparatus 10 according to an embodiment includes the reservoir 16 for storing water supplied from the water tank, the hot water tank 20 and the cold water tank 30 receiving the water from the reservoir 16, and a carbonated water tank 70 for receiving the water from the cold water tank 30 to generate carbonated water.

In detail, a branch tube 16a connected to the hot water tank 20 and the cold water tank 30 is disposed at a side of the reservoir 16. Water within the reservoir 16 is divided through the branch tube 16a, and then, flows into the hot water tank 20 and the cold water tank 30.

A first check valve 21 for preventing the water within the hot water tank 20 from flowing backward toward the branch tube 16a is disposed at a side of the hot water tank 20. A heating coil (not shown) for heating the water introduced into the hot water tank 20 is disposed inside the hot water tank 20.

A first cooling case 100 separably coupled to the cold water tank 30 is disposed at a side of the cold water tank 30. A first refrigerant coil 102 configured to cool the cooling case 100 is disposed outside the first cooling case 100. The first refrigerant coil 102 is wound along an outer surface of the first cooling case 100.

A second cooling case 110 separably coupled to the carbonated water tank 70 is disposed outside the carbonated water tank 70. A second refrigerant coil 112 for cooling the water stored in the carbonated water tank 70 is disposed outside the second cooling case 110. The second refrigerant coil 110 is wound along an outer surface of the second cooling case 110.

The refrigerant coils 102 and 112 may serve as evaporators.

A water pump 33 for pumping the water within the cold water tank 30 to supply the pumped water to the carbonated water tank 70 is disposed between the cold water tank 30 and the carbonated water tank 70.

A second check valve 31 for preventing the carbonated water from flowing backward from the carbonated water tank 70 is disposed in a side of the water pump 33. It may prevent the carbonated water form flowing backward toward the cold water tank 30 due to the second check valve 31.

The cold water pumped from the cold water tank 30 is introduced into the carbonated water tank 70 through the second check valve 31. A cold water inlet port 71a through which the cold water is introduced is disposed on the carbonated water tank 70.

The water supply apparatus 10 further includes the compressor 12 for compressing the refrigerant passing through the each of the refrigerant coils 102 and 112 to a high-temperature high-pressure, the condenser 17 in which the refrigerant is heat-exchanged with indoor air, an expansion valve 18 for expanding the refrigerant passing through the condenser 17 to a low-temperature low-pressure.

A carbon dioxide cylinder 80 for supplying carbon dioxide to generate the carbonated water is disposed in the water supply apparatus 10. A regulator 84 for regulating the carbon dioxide having a high pressure (about 60 kg/cm²) supplied from an outlet of the carbon dioxide cylinder 80 to a proper pressure (about 4 kg/cm²) is disposed in the water supply apparatus 10.

A pressure sensor 81 for detecting a pressure of the carbon dioxide is connected to the regulator 84. The pressure sensor 81 detects whether the pressure of the carbon dioxide passing through the regulator 84 is maintained at a predetermined level. When the pressure sensor 81 detect that the pressure of the carbon dioxide drops below the predetermined level, the pressure sensor 81 transmits the detected result to a controller (not shown) to inform replacement of the carbon dioxide cylinder 80.

A third check valve 82 for preventing the carbon dioxide from flowing backward toward the carbon dioxide cylinder 80 is disposed at a side of the pressure sensor 81.

The carbon dioxide supplied from the carbon dioxide cylinder 80 may introduced into the carbonated water tank 70 through the third check valve 82. A carbon dioxide inlet port 71b through which the carbon dioxide is introduced is disposed on the carbonated water tank 70.

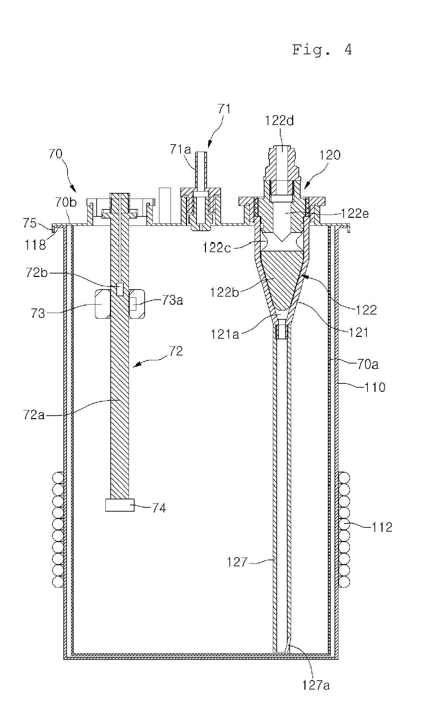

The cold water inlet port 71a and the carbon dioxide inlet port 71b are disposed in a nozzle (see reference numeral 71 of FIG. 4) (that will be described later) of the carbonated water tank 70. A carbonated water outlet port 78 through which the carbonated water mixed in the carbonated water tank 70 is discharged is disposed on the carbonated water tank 70.

The water supply apparatus 10 includes a valve assembly 57 for selectively dispensing the water discharged from the hot water tank 20, the cold water tank 30, and the carbonated water tank 70 through the dispensing part 57.

The valve assembly 57 includes a first valve 57a for selectively dispensing the water discharged from the hot water tank 20, a second valve 57b for selectively dispensing the water discharged from the cold water tank 30, and a third valve 57c for selectively dispensing the water discharged from the carbonated water tank 70. Solenoid valves may be used as the valves 57a, 57b, and 57c.

The valves 57a, 57b, and 57c are connected to the input part 41. When the user pushes the dispensing button of the input part 41 corresponding to cold water, hot water, or carbonated water, a power is applied to the corresponding valve of the valves 57a, 57b, and 57c. As a result, the corresponding valve to which the power is applied is opened. Thus, one of the cold water, the hot water, and the carbonated water is dispensed through the dispensing part 56.

A function of the water supply apparatus 10 including the above-described components will be simply described. Water within the water tank is introduced into the hot water tank 20 and the cold water tank 30 through the reservoir 16.

The water stored in the hot water tank 20 is heated by the heating coil, and then, flows toward the first valve 57a. The water stored in the cold water tank 30 is cooled by the first refrigerant coil 102, and then, flows toward the second valve 57b.

A portion of the cold water stored in the cold water tank 30 is pumped by the water pump 33 and introduced into the carbonated water tank 70.

Simultaneously, a carbon dioxide gas injected from the carbon dioxide cylinder 80 is supplied to the carbonated water tank 70. The supplied cold water and the carbon dioxide gas are mixed to generate carbonated water. The carbonated water is discharged from the carbonated water tank 70 through the carbonated water outlet port 78 and flows toward the third valve 57c.

Hereinafter, structures of the cold water tank 30 and the carbonated water tank 70 according to an embodiment will be described reference to accompanying drawings.

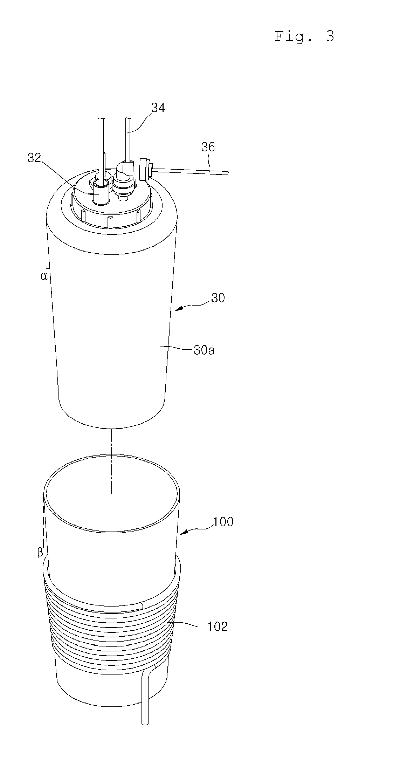

FIG. 3 is an exploded perspective view of a cold water tank and a first cooling case according to an embodiment.

Referring to FIG. 3, the cold water tank 30 according to an embodiment includes a cold water tank body 30a defining an outer appearance thereof, a cold water inlet port 32 through which cold water is introduced from the reservoir 16, the cold water being disposed on a top surface of the cold water tank body 30a, a cold water outlet port 34 through which the cold water is discharged toward the second valve 57b, and a branch tube 36 through which a portion of the water stored in the cold water tank body 30a is introduced into the carbonated water tank 70.

The cold water tank 30 has a cylindrical shape for storing the cold water therein. The cold water tank 30 has an inclined outer surface such that the cold water tank 30 has a diameter gradually decreasing toward a downward direction. The outer surface of the cold water tank 30 is inclined at an angle of "α" with respect to a directly downward direction.

The first cooling case 100 separably coupled to the cold water tank 30 is disposed outside the cold water tank 30. The first cooling case 100 has a shape corresponding to that of the cold water tank 30 to fit the cold water tank 30 therein.

The cold water tank 30 may surface-contact the fist cooling case 100 in a state where the cold water tank 30 is fitted into the first cooling case 100. That is, the cold water tank 30 may be closely attached to the first cooling case 100.

A portion of the first cooling case 100 corresponding to a portion of the cold water tank 30 may have a diameter slightly greater than that of the cold water tank 30.

The first cooling case 100 has an inclined outer surface such that the first cooling case 100 has a diameter gradually decreasing toward a downward direction. The outer surface of the first cooling case 100 is inclined at an angle of "β" with respect to a directly downward direction. The angle "α" may correspond to the angle "β".

When the cold water tank 30 is compressed downwardly after the cold water tank 30 is fitted into the first cooling case 100, the cold water tank 30 may be closely attached and fixed to the first cooling case 100. When the cold water tank 30 is separated from the first cooling case 100, the cold water tank 30 may forcedly pull out upward.

As described above, the cold water tank 30 may be easily separated and coupled from/to the first cooling case 100 according to their configurations. That is, a coupling structure between the cold water tank 30 and the first cooling case 100 may be simple.

The first refrigerant coil 102 configured to cool the cooling case 100 is disposed outside the first cooling case 100. The first refrigerant coil 102 may be wound in a large number of turns around the outer surface of the first cooling case 100.

Here, the first cooling case 100 and the first refrigerant coil 102 may be separated from the cold water tank 30 at the same time.

Refrigerant flowing into the first refrigerant coil 102 may be heat-exchanged with the first cooling case 100 to cool the first cooling case 100. For easily transferring heat from the first refrigerant coil 102 to the first cooling case 100, the first cooling case 100 may be formed of a material having superior conductivity.

As described above, since the cold water tank 30 is easily separated from the first cooling case 100, it is easy to clean and replace the cold water tank 30.

The cold water tank 30 may be formed of plastic. In this case, cost burden may be reduced even through the cold water tank 30 is periodically replaced. Since the outer surface of the cold water tank 30 contacts the inner surface of the first cooling case 100 to smoothly transfer the heat from the first refrigerant coil 102 to the first cooling case 100, heat transfer efficiency may be improved.

That is, since the outer surface of the cold water tank 30 may be equally cooled from the first cooling case 100, the heat transfer efficiency may be improved, and also, a cooling time may be reduced.

FIG. 4 is a sectional view of the carbonated water tank according to an embodiment.

Referring to FIG. 4, the carbonated water tank 70 according to an embodiment includes a carbonated water tank body 70a defining an outer appearance thereof, a top cover 70b seated on an upper portion of the carbonated water tank body 70a, a nozzle 71 disposed on the top cover 70b to inject cold water or carbon dioxide, and a carbonated water outflow hole 122d.

In detail, the cold water inlet port 71a and the carbon dioxide inlet port 71b are disposed in the nozzle 71. Cold water and carbon dioxide introduced into the cold water inlet port 71a and the carbon dioxide inlet port 71b are injected at a high pressure into the carbonated water tank 70 through the nozzle 71.

A water level sensor 72 is disposed at an approximately central portion of the inside of the carbonated water tank body 70a. The water level sensor 72 may be coupled to the top cover 70b.

The level sensor 72 includes a shaft 72a extending toward the inside of the carbonated water tank body 70a by a predetermined length and a sensing floater 73 fitted into an outer surface of the shaft 72a to ascend or descend according to a water level.

A hole sensor 72b may be disposed inside the shaft 72a, and a magnet 73a may be disposed inside the sensing floater 73.

The hole sensor 72b detects a magnetic field generated from the magnet 73a due to ascent and descent of the sensing floater 73 to transmit the detected result to the controller. That is, when the water level within the carbonated water tank body 70a is low, the hole sensor 72 detects a weak magnetic field. As the water level increases, the magnetic field increases in intensity. When the carbonated water within the carbonated water tank body 70a reaches a set water level, the hole sensor 72b detect the carbonated water level to transmit the detected result to the controller. Then, the controller stops an operation of the water pump 33. Here, the water level sensor may include all sensing members that perform the same function as the hole sensor 72b as well as the hole sensor disclosed in this embodiment.

A temperature sensor 74 for detecting a carbonated water temperature is disposed at a lower portion of the shaft 72a. The temperature sensor 74 is connected to the controller (not shown) to detect a temperature of the carbonated water at every moment, thereby transmitting the detected results to the controller. The controller determines whether the carbonated water temperature is over a set temperature to control an operation of the compressor 12.

That is to say, when the temperature of the carbonated water within the carbonated water tank 70 is over the set temperature, the compressor 12 is operated to perform a refrigerant cycle.

The second cooling case 110 configured to cool the carbonated water tank 70 is disposed outside the carbonated water tank body 70a. The carbonated water tank 70 may be separably received into the second cooling case 110.

The carbonated water tank 70 has an approximately cylindrical shape. The carbonated water tank 70 may be received into the second cooling case 110. For this, the second cooling case 110 has a shape corresponding to that of the carbonated water tank 70, and the second cooling case 110 may have a size slightly greater than that of the carbonated water tank 70.

In a state where the carbonated water tank 70 is received into the second cooling case 110, an outer surface of the carbonated water tank 70 surface-contacts the second cooling case 110 to maintain their closely attached state.

An outwardly protruding first flange 75 is disposed at the top cover 70b. An outwardly protruding second flange 118 is disposed at an edge of a top surface of the second cooling case 110.

In the state where the carbonated water tank 70 is received into the second cooling case 110, the first flange 75 may be coupled to the second flange 118.

In detail, when the top cover 70b is coupled to the second cooling case 110, the first flange 75 may be coupled to the second flange 118 while the first flange 75 is elastically deformed. On the other hand, when the top cover 70b is separated from the second cooling case 110, the first flange 75 may be elastically deformed.

When the first flange 75 is coupled to the second flange 118, the top cover 70b covers the carbonated water tank body 70a and the top surface of the second cooling case 110.

The second refrigerant coil 112 configured to cool the second cooling case 110 is disposed outside the second cooling case 110. Here, the second cooling case 110 and the second refrigerant coil 112 may be separated from the carbonated water tank 30 at the same time.

Refrigerant passing through the condenser 17 flows into the second refrigerant coil 112. The refrigerant is heat-exchanged with the second cooling case 110.

The second cooling case 110 may be heat-exchanged with the carbonated water tank 70. Since the carbonated water tank 70 surface-contacts the second cooling case 110 to heat-exchange therebetween, the heat transfer efficiency may be improved, and also, the cooling time may be reduced.

When the replacement and cleaning of the carbonated water tank 70 are required, only the carbonated water tank 70 may be separated. Thus, convenience of use and sanitation may be improved.

A pre-mixer 120 configured to generate highly concentrated carbonated water is disposed inside the carbonated water tank body 70a.

The pre-mixer 120 includes a housing 121, a mixing rod 122 inserted into the housing 121, and a carbonated water duct 127 extending downwardly from a lower end of the housing 121.

In detail, an opening 127a through which the carbonated water stored in the carbonated water tank body 70a is introduced into the carbonated water duct 127 is defined in a lower portion of the carbonated water duct 127. The carbonated water introduced through the opening 127a may be upwardly moved along the carbonated water duct 127 having a thin tube shape.

An inflow hole 121a through which the carbonated water moved along the carbonated water duct 127 is introduced is defined in a lower portion of the housing 121. An upper portion of the housing 121 is coupled to a top surface of the carbonated water tank 70.

The mixing rod 122 includes a conic portion 122b having a diameter gradually decreasing toward a lower end of the mixing rod 122 and a groove 122c formed in an upper portion of the conic portion 122b and having a band-like shape depressed by a predetermined depth.

That is, the mixing rod 122 has a diameter gradually decreasing from the conic portion 122b toward an upper side, and then, increasing from the groove 122c toward an upper side.

The outflow hole 122d through which the carbonated water is discharged to the outside of the pre-mixer 120 is defined in an end opposite to the conic portion 122b. An internal passage 122e connecting the outflow hole 122d to an end of the groove 122c is formed in the mixing rod 122. Here, the outflow hole 122d may be a portion of the carbonated water outlet port 78.

According to the configuration described above, the carbonated water introduced through the inflow hole 121a is spread radially through a gap between an inner surface of the housing 121 and the conic portion 122b, and then flows toward the groove 122c.

That is, the carbonated water flows into the narrow gap between the housing 121 and the conic portion 122b, and then is spread to a wide space at the groove 122c.

In this process, the carbonated water may have a pressure less than an internal pressure (about 4 kg/cm² to about 5 kg/cm²) of the carbonated water tank 70. As a result, a dispensing pressure of the carbonated water may be adjusted by the pre-mixer 120. Therefore, the carbonated water may be adjusted to a pressure suitable for dispensing.

The carbonated water flowing into the groove 122c is discharged along the internal passage 122e. The discharged carbonated water flows toward the third valve 57c.

Here, the carbonated water introduced into the inflow hole 121a is mixed again while flowing through the conic portion 122b and the groove 122c. Accordingly, concentration of carbonic acid in the carbonated water is uniformed, and thus the carbonated water tastes better.

Since the pre-mixer 120 is disposed inside the carbonated water tank 70 and exposed to a low temperature environment, it may prevent a temperature of the carbonated water from increase by external air.

Hereinafter, a process of manufacturing the carbonated water will be described in detail.

When a user pushes the carbonated water button to dispense the carbonated water, the carbonated water is discharged to the outside of the carbonated water tank 70 through the outflow hole 122d, and then, dispensed through the third valve 57c.

When a water level within the carbonated water tank 70 decreases, the sensing floater 73 descends due to the descent of the water level. Here, when the sensing floater 73 descends, the hole sensor 72b detects the descent of the water level. Then, the hole sensor 72b transmits a signal to the controller to operate the water pump 33.

Since the water pump 33 is operated, the cold water stored in the cold water tank 30 is introduced into the carbonated water tank 70 through the cold water inlet port 71a of the carbonated water tank 70. At this time, the cold water introduced through the cold water inlet port 71a is injected at a high pressure by the nozzle 71.

A pressure of carbon dioxide supplied from the carbon dioxide cylinder 80 is regulated by the regulator 84, and the pressure-regulated carbon dioxide is introduced into the carbonated water tank 70 through the carbon dioxide inlet port 71a. At this time, the carbon dioxide is injected at a high pressure by the nozzle 71.

The cold water and the carbon dioxide introduced into the carbonated water tank 70 are mixed to each other to form carbonated water. Then, when a water level of the formed carbonated water reaches the set water level, the hole sensor 72b detects the water level of the carbonated water to stop the operation of the water pump 33.

On the other hand, the carbon dioxide is continuously introduced into the carbonated water tank 70 even through the water level of the carbonated water reaches the set water level. In this process, an internal pressure of the carbonated water tank 70 increases.

When a pressure of the gas introduced into the carbonated water tank 70 is equal to the internal pressure of the carbonated water tank 70, the introduction of the carbonated water is stopped.

According to the above-described processes, the user may easily obtain and drink the carbonated water. When the replacement and cleaning of the cold water tank 30 and the carbonated water tank 70 are required due to repetition of the above-described processes, the cold water tank 30 and the carbonated water tank 70 are respectively separated from the cooling cases 100 and 110 to replace and clean them.

That is, since the refrigerant coils 102 and 112 are not fixed to the cold water tank 30 because the refrigerant coils 102 and 112 are directly wound around the cold water tank 30, only the tanks 30 and 70 may be separated to easily replace and clean the tanks 30 and 70.

In addition, since the tanks 30 and 70 surface-contacts the cooling cases 100 and 110 to heat-exchange therebetween, the heat transfer (cooling) efficiency may be improved.

Hereinafter, a configuration of a carbonated water tank according to another embodiment will be described. This embodiment is equal to the previously described embodiment except existence of a cooling case. Thus, the same reference numbers will be used throughout the drawing to refer to the same or like parts as those in the previously described embodiment.

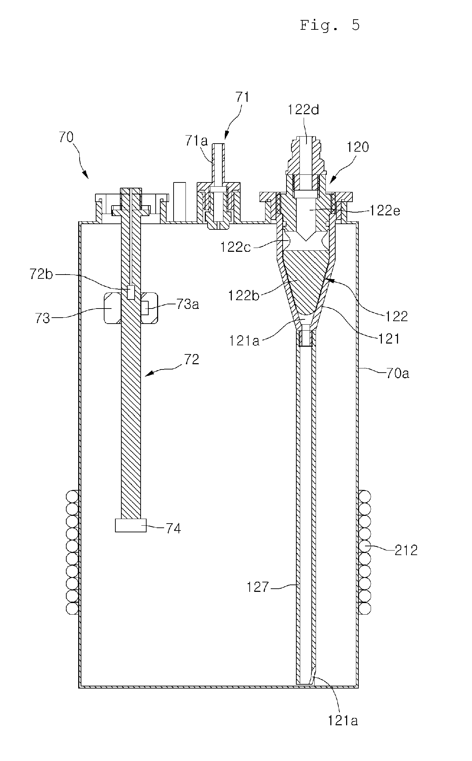

FIG. 5 is a sectional view of a carbonated water tank according to another embodiment.

Referring to FIG. 5, a second refrigerant coil 212 configured to cool carbonated water stored within a carbonated water tank 70 is disposed outside the carbonated water tank 70 according to this embodiment.

The second refrigerant coil 212 may be directly wound around the carbonated water tank 70 to linearly contact an outer surface of the carbonated water tank 70.

Refrigerant flowing into the second refrigerant coil 212 is heat-exchanged with the carbonated water tank 70. The refrigerant in which a temperature thereof increases by the heat-exchange may be introduced into a condenser 12.

According to the embodiments, since the cold water tank and the carbonated water tank are separably coupled to the cooling cases, it may be easy to replace and clean the cold water tank and the carbonated water tank.

Also, since the cooling cases are cooled by the refrigerant coils, and the cooling cases surface-contact the cold water tank and the carbonated water tank to heat-exchange therebetween, the heat transfer efficiency may be improved.

Also, since the pre-mixer is disposed inside the carbonated water tank to easily mix the cold water with the carbon dioxide, it may prevent the temperature of the carbonated water from increase by the external air.

Also, since the dispensing pressure of the carbonated water is adjusted by the pre-mixer, the carbonated water may be stably dispensed from the carbonated water tank.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A water supply apparatus comprising:
a carbonated water tank in which cold water and carbon dioxide are mixed to generate carbonated water;
a carbon dioxide container supplying the carbon dioxide to the carbonated water tank;
a cold water tank supplying cold water to the carbonated water tank;
a first cooling case separably coupled to the outside of the cold water tank, the first cooling case being heat-exchanged with the cold water tank; and
a first refrigerant coil disposed outside the first cooling case, the first refrigerant coil being configured to cool the first cooling case,
wherein an outer surface of the cold water tank contacts an inner surface of the first cooling case to cool the first cooling case.

2. The water supply apparatus according to claim 1, wherein the outer surface of the cold water tank is inclined such that the cold water tank has a diameter gradually decreasing toward a downward direction, and the first cooling case has a shape corresponding to that of the cold water tank.

3. The water supply apparatus according to claim 1, further comprising:
a second refrigerant coil disposed outside the carbonated water tank; and
a second cooling case disposed between the carbonated water tank and the second refrigerant coil, the second cooling case being separably coupled to the carbonated water tank.

4. The water supply apparatus according to claims 1, wherein a pre-mixer for mixing the cold water with the carbon dioxide is further disposed inside the carbonated water tank,
wherein the pre-mixer comprises:
a housing coupled to a top surface of the carbonated water tank; and
a mixing rod inserted into the housing.

5. The water supply apparatus according to claims 4, wherein the mixing rod comprises:
a conic portion having a diameter gradually decreasing toward a downward direction;
a groove disposed above the conic portion and depressed by a predetermined depth;
an outflow hole through which the carbonated water is discharged to the outside of the pre-mixer; and
an internal passage connecting the outflow hole to the groove.

6. The water supply apparatus according to claims 4, further comprising a carbonated water duct extending from the housing in a direction, the carbonated water duct having an opening through which the carbonated water is introduced.

7. The water supply apparatus according to claim 1, further comprising:
a water level sensor disposed inside the carbonated water tank to detect a water level of the carbonated water; and
a sensing floater movably coupled to the water level sensor.

8. The water supply apparatus according to claim 7, wherein the water level sensor comprises:
a shaft extending in a vertical direction; and
a sensor disposed inside the shaft to detect movement of the sensing floater.

9. The water supply apparatus according to claim 1, further comprising a temperature sensor detecting a temperature of the carbonated water.

10. The water supply apparatus according to claim 1, wherein the carbonated water tank comprises:
a carbonated water tank body in which the carbonated is received; and
a top cover seated on an upper portion of the carbonated water tank body.

11. The water supply apparatus according to claim 10, wherein a first flange coupled to the first cooling case is disposed at the top cover, and a second flange separably coupled to the first flange is disposed at the first cooling case.

12. The water supply apparatus according to claim 1, further comprising:
a water tank supplying water to the cold water tank;
a reservoir storing the water within the water tank, the reservoir supplying the water to the cold water tank;
an air pump supplying external air to the reservoir; and
an air filter filtering the air supplied through the air pump.

13. The water supply apparatus according to claim 1, further comprising:
a regulator regulating a pressure of the carbon dioxide discharged from the carbon dioxide container; and
a pressure sensor detecting whether the pressure of the carbon dioxide passing through the regulator is maintained at a predetermined value.
